# EUROPÄISCHE PATENTSCHRIFT

(11) **EP 2 625 416 B1**
(45) Veröffentlichungstag und Bekanntmachung des Hinweises auf die Patenterteilung: **08.04.2015**
(21) Anmeldenummer: 11761339.8
(22) Anmeldetag: 22.09.2011
(51) Int. Cl.: F02M 35/02, F02M 35/024, B01D 46/00

(54) **FILTEREINRICHTUNG**
FILTER DEVICE
DISPOSITIF DE FILTRATION

(30) Priorität: 04.10.2010 DE 102010041948
(43) Veröffentlichungstag der Anmeldung: 14.08.2013
(73) Patentinhaber: Mahle International GmbH, 70376 Stuttgart (DE)
(72) Erfinder: VON MERKATZ, Hendrik, 71686 Remseck (DE); WOHLMANN, Eugen, 74613 Öhringen (DE)
(74) Vertreter: BRP Renaud & Partner mbB Rechtsanwälte Patentanwälte Steuerberater
(86) Internationale Anmeldenummer: PCT/EP2011/066473
(87) Internationale Veröffentlichungsnummer: WO 2012/045583

(56) Entgegenhaltungen:
- EP-A1- 0 490 169
- EP-A1- 1 647 701
- EP-A2- 0 982 062
- DE-A1- 4 412 474
- FR-A1- 2 691 912
- GB-A- 2 400 574

## Beschreibung

Die vorliegende Erfindung betrifft eine Filtereinrichtung für Gase, insbesondere Luftfiltereinrichtung, vorzugsweise für eine Frischluftanlage einer Brennkraftmaschine, zum Beispiel eines Kraftfahrzeugs, gemäß dem Oberbegriff des Anspruchs 1.

Eine gattungsgemäße Luftfiltereinrichtung ist aus der DE 44 12 474 A1 bekannt. Sie umfasst ein Gehäuse, das ein erstes Gehäuseteil und ein zweites Gehäuseteil aufweist, die in einem Flanschbereich axial aneinander anstoßen. Ferner ist ein plattenförmiges Filterelement vorgesehen, das eine umlaufende Dichtung aufweist, die in den Flanschbereich eingreift. Das erste Gehäuseteil weist im Flanschbereich zwei einander gegenüberliegende radiale Anlageflächen auf, während die Dichtung zwei voneinander abgewandte radiale Dichtflächen aufweist, die flächig an den Anlageflächen anliegen. Bei der bekannten Filtereinrichtung ist die Dichtung im Querschnitt als Vollkörper ausgestaltet.

Aus der WO 2009/150165 A1 ist eine Filtereinrichtung zur Filtration gasförmiger Fluide bekannt, die ein Gehäuse besitzt, das zumindest ein erstes Gehäuseteil und ein zweites Gehäuseteil aufweist, die in einem Flanschbereich axial aneinander anstoßen. Ferner weist die Filtereinrichtung ein plattenförmiges Filterelement auf, das mit einer umlaufenden Dichtung ausgestattet ist, die in den Flanschbereich eingreift. Ein "plattenförmiges" Filterelement oder Plattenfilterelement erstreckt sich im Wesentlichen in einer Ebene, die sich quer zur Durchströmungsrichtung erstreckt. Bei dieser bekannten Filtereinrichtung besitzt das erste Gehäuseteil im Flanschbereich eine dem Gehäuseinneren zugewandte radiale Anlagefläche, während die Dichtung im Flanschbereich eine vom Gehäuseinneren abgewandte radiale Dichtfläche besitzt, die im montierten Zustand flächig an der einen Anlagefläche des ersten Gehäuseteils radial dichtend zur Anlage kommt. Des Weiteren ist die Dichtung an einer dem Gehäuseinneren zugewandten Seite am zweiten Gehäuseteil radial abgestützt.

Aus der EP 0 982 062 A2 ist eine Luftfiltereinrichtung bekannt, bei der die Dichtung radial zwischen zwei Dichtflächen einen umlaufenden, zum zweiten Gehäuseteil axial offenen Schlitzbereich aufweist.

Eine weitere Filtereinrichtung dieser Art ist aus der EP 1 647 701 B1 bekannt.

Die vorliegende Erfindung beschäftigt sich mit dem Problem, für eine Filtereinrichtung der eingangs genannten Art eine verbesserte Ausführungsform anzugeben, die sich insbesondere durch eine vergleichsweise leichte Montierbarkeit sowie durch eine effektive Dichtungswirkung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einer Filtereinrichtung, bei der die Gehäuseteile im Flanschbereich direkt aneinander axial zur Anlage kommen, das erste Gehäuseteil im Flanschbereich mit zwei einander gegenüberliegenden radialen Anlageflächen auszustatten und die Dichtung mit zwei voneinander abgewandten radialen Dichtflächen zu versehen, die im montierten Zustand flächig an den Anlageflächen anliegen. Auf diese Weise werden im Flanschbereich zwei radial wirkende Dichtungszonen realisiert, die radial voneinander beabstandet sind. Durch die Anbringung der beiden Anlageflächen am selben Gehäuseteil wirken die beiden Dichtungszonen in Reihe, was die Effektivität der erzielbaren Dichtung vergrößert. Des Weiteren kann das Filterelement im Rahmen der Montage der Filtereinrichtung einfach am ersten Gehäuseteil so montiert werden, dass das zweite Gehäuseteil ohne wesentliche axiale Montagekräfte am ersten Gehäuseteil axial zur Anlage gebracht werden kann, um die beiden Gehäuseteile in dieser Relativlage aneinander zu fixieren. Hierdurch ergibt sich eine signifikante Vereinfachung der Montage.

Entsprechend einer vorteilhaften Ausführungsform kann das erste Gehäuseteil einen im Flanschbereich umlaufenden, axial abstehenden, die radial außen liegende radiale Anlagefläche aufweisenden Außensteg aufweisen. Das zweite Gehäuseteil kann dann zweckmäßig eine im Flanschbereich umlaufende axiale Stützfläche aufweisen, an welcher sich der Außensteg axial abstützt. Somit liegen die beiden Gehäuseteile im montierten Zustand über die Stützfläche und den Außensteg axial aneinander an. Hierdurch wird eine definierte Relativlage für den Montagezustand gewährleistet.

Erfindungsgemäß weist die Dichtung radial zwischen den Dichtflächen einen umlaufenden, zum zweiten Gehäuseteil axial offenen Schlitzbereich auf. Durch diesen

Schlitzbereich erhält die Dichtung in der Radialrichtung eine erhöhte Elastizität, wodurch sich die beiden Dichtflächen leichter radial aufeinander zu komprimieren lassen, was das Einbringen der Dichtung in einen zwischen den beiden Anlageflächen am ersten Gehäuseteil ausgebildeten Aufnahmeraum vereinfacht.

In besagtem Schlitzbereich sind erfindungsgemäß mehrere, in Umlaufrichtung voneinander beabstandete Radialstege vorgesehen, über die sich radial gegenüberliegende Schlitzwände aneinander radial abstützen. Mit Hilfe derartiger Radialstege kann die Dichtung im Schlitzbereich wieder stabilisiert werden, beispielsweise um die radialen Vorspannkräfte, mit denen die Dichtflächen an den Anlageflächen radial zur Anlage kommen, zu erhöhen. Während der Schlitzbereich grundsätzlich eine Radialverstellung der Dichtflächen innerhalb der Dichtung ermöglicht, sorgen die Radialstege für die Aufrechterhaltung einer ausreichenden radialen Vorspannung, die einer derartigen radialen Kompression entgegenwirkt.

Entsprechend einer anderen vorteilhaften Weiterbildung können die Radialstege integral an der Dichtung oder integral am zweiten Gehäuseteil, insbesondere an der zuvor genannten Stützfläche ausgeformt sein. Ebenso ist es möglich, mehrere Radialstege integral an der Dichtung und mehrere Radialstege integral am zweiten Gehäuseteil, beispielsweise an der zuvor genannten Stützfläche, auszuformen. Durch die Integration der Radialstege in die Dichtung lassen sich die Radialstege besonders einfach aus dem gleichen Material wie die Dichtung herstellen. Bei einem Zwei-Komponenten-Verfahren ist es grundsätzlich jedoch auch möglich, die Radialstege aus einem anderen Material an die Dichtung anzuspritzen. Bei der integralen Ausgestaltung der Radialstege am Gehäuseteil lässt sich besonders einfach für die Radialstege ein anderes Material wählen als für die Dichtung. Insbesondere können die Radialstege dadurch eine im Vergleich zur Dichtung höhere Steifigkeit aufweisen. Insbesondere ist es dadurch möglich, die Dichtung aufgrund des Schlitzbereichs einfach am ersten Gehäuseteil zu montieren und durch das Ansetzen des zweiten Gehäuseteils, wobei die Radialstege des zweiten Gehäuseteils in den Schlitzbereich der Dichtung eintauchen und in der Dichtung die Dichtflächen radial nach außen antreibende Kräfte erzeugen, die Dichtungswirkung signifikant zu verbessern. Dabei können die gehäuseseitigen Radialstege in der Umlaufrichtung jeweils zwischen dichtungsseitige Radialstege in den Schlitzbereich eintauchen.

Alternativ ist es ebenso möglich, am zweiten Gehäuseteil, insbesondere an der vorgenannten Stützfläche, einen in der Umlaufrichtung umlaufenden, axial vorstehenden Steg auszuformen, der sich im Querschnittsprofil insbesondere mit zunehmendem Abstand vom Gehäuseteil verjüngen kann, der so geformt und positioniert ist, dass er beim Montieren des zweiten Gehäuseteils in den Schlitzbereich der Dichtung mehr oder weniger eintaucht.

Bei einer anderen Ausführungsform können die Radialstege in der Axialrichtung gleich groß wie oder kleiner als der Schlitzbereich ausgestaltet sein. Zusätzlich oder alternativ können die Radialstege in der Axialrichtung unterschiedliche Größen aufweisen. Ferner können die Radialstege in der Umlaufrichtung voneinander abgewandte Außenseite aufweisen, die sich parallel zueinander oder zueinander geneigt erstrecken, wobei zueinander geneigte Außenseiten radial nach außen konvergieren oder divergieren können. Die vorbeschriebenen Varianten, die kumulativ oder alternativ oder in beliebiger Kombination realisierbar sind, können jeweils dazu verwendet werden, die Elastizität der Dichtung, insbesondere in radialer Richtung, gezielt so einzustellen, dass sich eine besonders einfache Montage bei ausreichender Dichtungswirkung ergibt.

Entsprechend einer anderen vorteilhaften Ausführungsform kann der Filterkörper in der Axialrichtung einen mehreckigen, insbesondere rechteckigen, Querschnitt aufweisen. Der zuvor genannte Schlitzbereich kann in wenigstens einem Eckbereich des Filterkörpers, vorzugsweise in jedem Eckbereich des Filterkörpers, eine radiale Ausnehmung aufweisen, und zwar insbesondere an einer radial außenliegenden Schlitzwand. Durch eine derartige Ausnehmung kann das Dichtungsmaterial, das beim Montieren des Filterkörpers am ersten Gehäuseteil durch das radiale Komprimieren der Dichtung in der Umlaufrichtung verdrängt wird, im jeweiligen Eckbereich in eine derartige Ausnehmung ausweichen. Hierdurch kann insbesondere die Gefahr einer Faltenbildung sowie einer Verhärtung innerhalb der jeweiligen Dichtfläche vermieden werden. Die jeweilige Ausnehmung ist dabei in der Radialrichtung nicht durchgehend, so dass sie die Dichtung nicht durchdringt. Die radiale Tiefe der jeweiligen Ausnehmung ist dementsprechend kleiner als ein radialer Abstand zwischen der jeweiligen Schlitzwand und der jeweiligen benachbarten Dichtfläche. Folglich sind die Dichtflächen in der Umlaufrichtung unterbrechungsfrei bzw. durchgehend konzipiert.

Gemäß einer anderen vorteilhaften Ausführungsform kann das erste Gehäuseteil im Flanschbereich eine umlaufende, zum zweiten Gehäuseteil axial offene Nut aufweisen, deren einander zugewandte Nutwände die Anlageflächen aufweisen bzw. bilden. Diese Nut umschließt dabei den zuvor genannten Aufnahmeraum, in den die Dichtung axial einsteckbar ist. Die Abmessungen dieser Nut und der Dichtung sind dabei vorzugsweise so aufeinander abgestimmt, dass zwischen der Dichtung und einem zwischen den Nutwänden liegenden Nutgrund ein Axialabstand vorhanden ist. Das bedeutet, dass die Dichtung bei ordnungsgemäßen Gebrauch in der Axialrichtung nicht gegen einen Anschlag anläuft. Dies vereinfacht die Montage des Filterelements am ersten Gehäuseteil.

Es ist vorteilhaft, wenn eines der Gehäuseteile über einen Schutzkragen verfügt, der außen um den Aufnahmeraum für die Dichtung, zumindest in wesentlichen Bereichen, umläuft. Vorzugsweise umringt der Schutzkragen den Aufnahmeraum vollständig. Der Schutzkragen, welcher als Ringwand, vorzugsweise einstückig, mit dem Gehäuseteil ausgeführt ist, verhindert, dass im montierten Zustand der Filtereinrichtung Verunreinigungen direkt zu der Dichtung vordringen können. Weiterhin verhindert der Schutzkragen, dass der Dichtungsbereich durch mechanische Einwirkung von außen beschädigt werden kann. Hierzu ist der Schutzkragen vorzugsweise an dem Gehäuseteil angeordnet, welches die Dichtung aufnimmt. Der Schutzkragen kann zu dem Aufnahmeraum beabstandet angeordnet sein, wodurch eine Kontur des anderen Gehäuseteils in diesen Abstand, insbesondere berührungslos, eingreifen und so einen besseren Schutz für die Dichtung bzw. den Dichtbereicht darstellen kann.

Gemäß einer anderen Ausführungsform kann die Dichtung radial zwischen den radialen Dichtflächen eine umlaufende axiale Dichtfläche aufweisen, die an einer umlaufenden, im Flanschbereich am zweiten Gehäuseteil ausgebildeten axialen Anlagefläche axial anliegt. Hierdurch wird an der Dichtung eine dritte Dichtungszone ausgebildet, die mit dem zweiten Gehäuseteil axial dichtend zusammenwirkt.

Besonders zweckmäßig ist dabei, wenn die Filtereinrichtung hinsichtlich ihrer Durchströmungsrichtung so betrieben bzw. eingesetzt wird, dass sich innerhalb des ersten Gehäuseteils eine Reinseite befindet, die durch das Filterelement von einer Rohseite getrennt ist, die sich innerhalb des zweiten Gehäuseteils befindet. Somit können gegebenenfalls auftretende Leckagen nur rohseitig stattfinden, was zumindest bei einer Frischluftanlage einer Brennkraftmaschine weitgehend unkritisch ist. Dagegen wird eine Falschluftansaugung durch die beiden in Reihe angeordneten Dichtungszonen zwischen der Dichtung und dem ersten Gehäuseteil weitgehend vermieden.

Bei einer speziellen Ausführungsform kann dabei vorgesehen sein, die axiale Anlagefläche axial auf gleicher Höhe anzuordnen, wie die zuvor beschriebene axiale Stützfläche, an welcher sich das erste Gehäuseteil am zweiten Gehäuseteil axial abstützt.

Bei einer anderen Ausführungsform kann das erste Gehäuseteil einen im Flanschbereich umlaufenden, axial abstehenden, die radial innenliegende radiale Anlagefläche aufweisenden bzw. bildenden Innensteg aufweisen. Insbesondere kann die Dichtung dann optional eine im Flanschbereich umlaufende, axiale Dichtfläche aufweisen, an welcher sich der Innensteg axial abstützt. Hierdurch kann die Dichtungswirkung zusätzlich verbessert werden.

Zweckmäßig kann zwischen dem Innensteg und dem zweiten Gehäuseteil ein Radialabstand vorhanden sein, der von der Dichtung durchsetzt ist. Zusätzlich oder alternativ kann zwischen der dem Innensteg zugewandten axialen Dichtfläche und einer dem zweiten Gehäuseteil zugewandten axialen Dichtfläche ein Axialabstand vorhanden sein. Zusätzlich oder alternativ kann der Innensteg in der Axialrichtung kürzer sein als ein Außensteg des ersten Gehäuseteils. Die vorstehenden Varianten können alternativ oder kumulativ oder in beliebiger Kombination realisiert werden. Insbesondere ermöglichen diese Merkmale eine spezielle geometrische Abstimmung zwischen den Gehäuseteilen und der Dichtung dahingehend, dass die Dichtung formstabil im Flanschbereich positioniert und abgestützt ist. Hierdurch kann eine vergleichsweise hohe Funktionssicherheit für die Dichtung erreicht werden.

Die Erfindung betrifft außerdem ein Filterelement, das sich für eine Verwendung in einer erfindungsgemäßen Filtereinrichtung eignet. Das Filterelement zeichnet sich dementsprechend zumindest dadurch aus, dass es plattenförmig ausgestaltet ist und eine umlaufende Dichtung aufweist, die im Flanschbereich zwei voneinander abgewandte radiale Dichtflächen besitz, und die radial zwischen den Dichtflächen einen umlaufenden, axial offenen Schlitzbereich aufweist, wobei im Schlitzbereich mehrere, in Umlaufrichtung voneinander beabstandete Radialstege vorgesehen sind, über die sich radial gegenüberliegende Schlitzwände aneinander radial abstützen.

Die Richtungsangaben "axial" und "radial" beziehen sich dabei auf die Montagerichtung, mit der das Filterelement am ersten Gehäuseteil und in der die beiden Gehäuseteile aneinander montiert werden. Diese Montagerichtung definiert dabei die Axialrichtung, das heißt, die Axialrichtung verläuft parallel zur Montagerichtung. Dementsprechend erstreckt sich die Radialrichtung quer zur Montagerichtung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: einen stark vereinfachten Längsschnitt durch eine Filtereinrichtung in einem Flanschbereich,
- Fig. 2: eine stark vereinfachte axiale Ansicht eines Filterelements in einem Eckbereich.

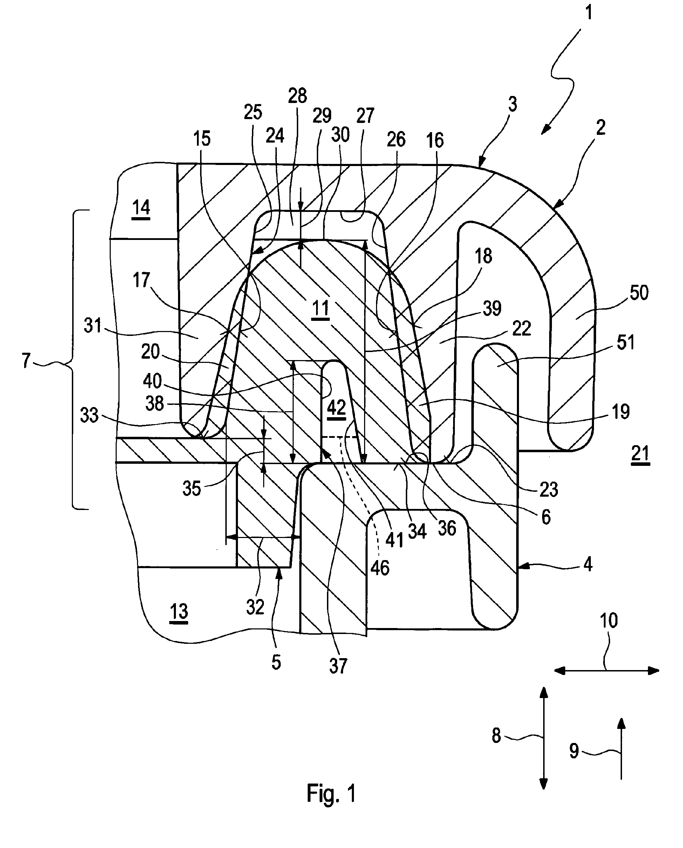

Entsprechend Fig. 1 umfasst eine Filtereinrichtung 1 ein Gehäuse 2, das zumindest ein erstes Gehäuseteil 3 sowie ein zweites Gehäuseteil 4 aufweist. Ferner umfasst die Filtereinrichtung 1 ein im Gehäuse 2 angeordnetes Filterelement 5. Die Filtereinrichtung 1 dient zum Filtrieren von Gasen, insbesondere von Luft. Vorzugsweise handelt es sich bei der Filtereinrichtung 1 somit um eine Luftfiltereinrichtung. Die Luftfiltereinrichtung 1 kann beispielsweise in einer Frischluftanlage einer Brennkraftmaschine verwendet werden, die in einem Kraftfahrzeug angeordnet sein kann.

Die beiden Gehäuseteile 3, 4 stoßen bei einer Stoßstelle 6 in einem Flanschbereich 7 axial aneinander an. Ferner sind die Gehäuseteile 3, 4 lösbar miteinander verbunden, was hier jedoch nicht dargestellt ist. Die Axialrichtung ist in Fig. 1 durch einen Doppelpfeil angedeutet und mit 8 bezeichnet. Die Axialrichtung 8 verläuft dabei parallel zu einer ebenfalls durch einen Pfeil angedeuteten Montagerichtung 9, in welcher die beiden Gehäuseteile 3, 4 aneinander angebracht werden. Ein weiterer Doppelpfeil 10 kennzeichnet eine Radialrichtung, die quer zur Axialrichtung 8 und dementsprechend auch quer zur Montagerichtung 9 verläuft.

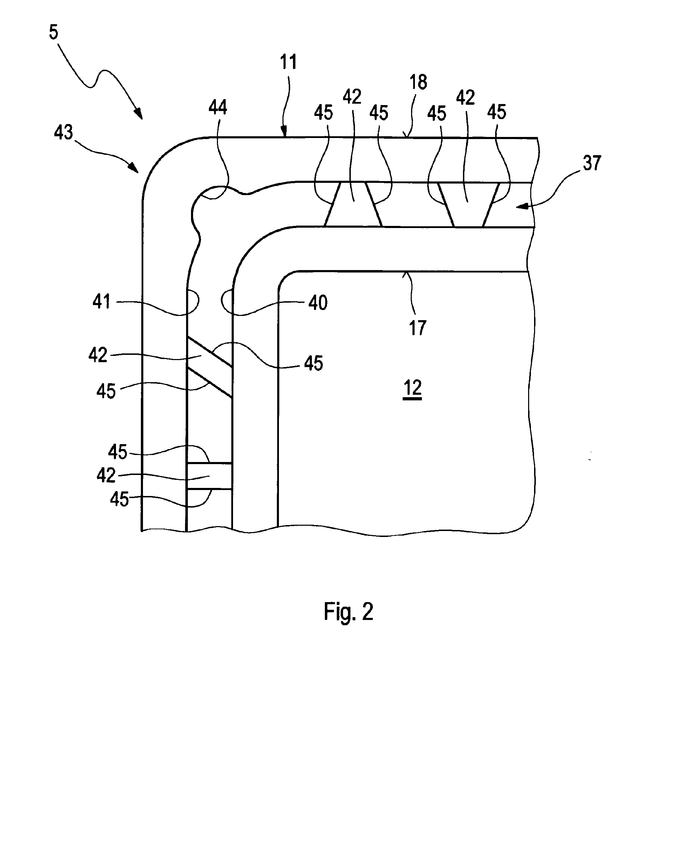

Das Filterelement 5 ist plattenförmig ausgestaltet und kann daher auch als Plattenfilterelement 5 bezeichnet werden. Das Filterelement 5 erstreckt sich dadurch insbesondere weitgehend in einer Ebene, die sich quer zur Axialrichtung 8 erstreckt. Das Filterelement 5 weist eine umlaufende Dichtung 11 auf, die in den Flanschbereich 7 eingreift. Die Dichtung 11 kann insbesondere an einen in Fig. 2 erkennbaren Filterkörper 12 angespritzt oder angeschäumt sein. Das Filterelement 5 trennt im Inneren des Filtergehäuses 2 eine Rohseite 13 von einer Reinseite 14. Da sich das Filterelement 5 im Wesentlichen zwischen den beiden Gehäuseteilen 3, 4 befindet, sind die Rohseite 13 und die Reinseite 14 in verschiedenen Gehäuseteilen 3, 4 angeordnet. So befindet sich im bevorzugten Beispiel die Reinseite 14 im ersten Gehäuseteil 3, während sich die Rohseite 13 im zweiten Gehäuseteil 4 befindet.

Das erste Gehäuseteil 3 weist im Flanschbereich 7 zwei einander gegenüberliegende radiale Anlageflächen 15 und 16 auf. Bezüglich des Gehäuseinneren ist die eine Anlagefläche 15 radial weiter innen angeordnet als die andere Anlagefläche 16, so dass die Anlageflächen 15, 16 auch als innere Anlagefläche 15 bzw. äußere Anlagefläche 16 bezeichnet werden können. Die Dichtung 11 weist zwei voneinander abgewandte radiale Dichtflächen 17 und 18 auf, die im montierten Zustand flächig an den Anlageflächen 15, 16 anliegen. In der Darstellung der Fig. 1 ist die Dichtung 1 in einem nicht komprimierten Ausgangszustand dargestellt, so dass in der Darstellung der Fig. 1 die Dichtflächen 17, 18 radial über die zugehörigen Anlagenflächen 15, 16 vorstehen. In der Realität wird jedoch die Dichtung 11 bei der Montage komprimiert, wodurch die Dichtflächen 17, 18 aufeinander zu radial verstellt werden. Im Einbauzustand liegt dann die radial innenliegende Dichtfläche 17 an der inneren Anlagefläche 15 an, während die radial außenliegende Dichtfläche 18 an der äußeren Anlagefläche 16 anliegt. Die Dichtflächen 17, 18 können im Folgenden auch als innere Dichtfläche 17 und äußere Dichtfläche 18 bezeichnet werden. Die äußere Dichtfläche 18 bildet mit der äußeren Anlagefläche 16 eine erste oder äußere Dichtzone 19 zwischen der Dichtung 11 und dem ersten Gehäuseteil 3. Die innere Dichtfläche 17 und die innere Anlagefläche 15 bilden eine zweite oder innere Dichtzone 20 zwischen der Dichtung 11 und dem ersten Gehäuseteil 3. Die beiden Dichtzonen 19, 20 sind am ersten Gehäuseteil 3 in Reihe angeordnet, wodurch sich eine besonders effektive Dichtungswirkung ergibt. Somit kann eine Falschluftströmung oder Leckageströmung zwischen der Reinseite 14 und einer Umgebung 21 des Gehäuses 2 vermieden werden.

Das erste Gehäuseteil 3 weist im Flanschbereich 7 einen Außensteg 22 auf, der vom ersten Gehäuseteil 3 axial absteht und in der Umlaufrichtung umlaufend ausgestaltet ist. Der Außensteg 22 weist die äußere Anlagefläche 16 auf. Das zweite Gehäuseteil 4 weist ebenfalls im Flanschbereich 7 eine axiale Stützfläche 23 auf, die in der Umlaufrichtung umlaufend ausgestaltet ist. Im montierten Zustand stützt sich der Außensteg 22 axial an dieser Stützfläche 23 ab. Hierdurch ergibt sich die unmittelbare Kontaktierung in der Kontaktstelle 6 und folglich eine definierte Positionierung zwischen den beiden Gehäuseteilen 3, 4 in der Axialrichtung 8.

Das erste Gehäuseteil 3 kann im Flanschbereich 7 außerdem eine umlaufende, zum zweiten Gehäuseteil 4 axial offene Nut 24 aufweisen, deren einander zugewandten Nutwände 25, 26 die beiden Anlageflächen 15, 16 aufweisen bzw. bilden. Zwischen den beiden Nutwänden 25, 26 besitzt die Nut 24 einen Nutgrund 27. Besagte Nut 24 begrenzt mit ihren Nutwänden 25, 26 und dem Nutgrund 27 einen Aufnahmeraum 28, in den die Dichtung 11 axial eingesetzt ist. Die Nut 24 und die Dichtung 11 sind hinsichtlich ihrer Abmessungen so aufeinander abgestimmt, dass in der Axialrichtung 8 zwischen der Dichtung 11 und dem Nutgrund 27 ein Axialabstand 29 herrscht, also eine Lücke bzw. ein Abstand zwischen dem Nutgrund 27 und einer dem Nutgrund 27 zugewandten axialen Stirnseite 30 der Dichtung 11 vorliegt.

Im Beispiel der Fig. 1 ist das erste Gehäuseteil 3 außerdem mit einem Innensteg 31 ausgestattet, der im Flanschbereich 7 in der Umlaufrichtung umlaufend angeordnet ist, dabei vom ersten Gehäuseteil 3 axial absteht und die innere Anlagefläche 15 aufweist. Die beiden Stege 22, 31 bilden somit die Nutwände 25, 26 und definieren dadurch die Nut 24. Erkennbar besitzen die Nutwände 25, 26 im gezeigten Axialschnitt ein geradliniges Profil, wobei die Nutwände 25, 26 in Richtung Nutgrund 27 aufeinander zulaufen, also konvergieren bzw. sich verjüngen.

Zwischen dem Innensteg 31 und dem zweiten Gehäuseteil 4 kann ein Radialabstand 32 vorgesehen sein, durch den die Dichtung 11 hindurchgeführt ist. Ferner ist der Innensteg 31 in der Axialrichtung 8 kürzer als der Außensteg 22.

Die Dichtung 11 kann im Flanschbereich 7 eine umlaufende axiale Dichtfläche 33 aufweisen, an welcher sich der Innensteg 31 axial abstützt. Zwischen dieser, dem Innensteg 31 zugewandten axialen Dichtfläche 33 und einer dem zweiten Gehäuseteil 4 zugewandten weiteren axialen Dichtfläche 34 der Dichtung 11 kann ebenfalls ein Axialabstand 35 vorhanden sein. Dieser stimmt im montierten Zustand mit der axialen Längendifferenz zwischen den beiden Stegen 31, 22 überein.

Die Dichtung 11 weist besagte Dichtfläche 34 auf, die ebenfalls umlaufend ausgestaltet ist und die sich an der Dichtung 11 zwischen den radialen Dichtflächen 17 und 18 befindet. Am zweiten Gehäuseteil 4 ist im Flanschbereich 7 eine umlaufende axiale Anlagefläche 36 ausgebildet, an welcher die axiale Dichtfläche 34 im montierten Zustand axial zur Anlage kommt. Bei der hier gezeigten speziellen Ausführungsform sind diese axiale Anlagefläche 36 und die zuvor genannte axiale Stützfläche 23 axial auf gleicher Höhe angeordnet. Insbesondere können somit die Stützfläche 23 und die Anlagefläche 36 übergangslos ineinander übergehen bzw. durch eine gemeinsame Achsfläche gebildet sein, die sich in einer quer zur Axialrichtung 8 verlaufenden Ebene erstreckt.

Entsprechend einer besonders vorteilhaften Ausführungsform kann die Dichtung 11 einen umlaufenden Schlitzbereich 37 aufweisen, der zum zweiten Gehäuseteil 4 axial offen ist und der radial zwischen den beiden radialen Dichtflächen 17, 18 angeordnet ist. Der Schlitzbereich 37 taucht dabei axial in die Dichtung 11 ein, ohne diese dabei in der Axialrichtung 8 zu durchdringen. Beispielsweise ist eine Schlitztiefe 38 in der Axialrichtung 8 maximal halb so groß wie eine axiale Höhe 39 der Dichtung 11. Die axiale Höhe 39 der Dichtung 11 entspricht hierbei dem Axialabstand zwischen der axialen Stirnseite 30 und der axialen Dichtfläche 34. Der Schlitzbereich 37 besitzt im Längsschnitt ein sich mit zunehmender Eindringtiefe in die Dichtung 11 verjüngendes Querschnittsprofil und besitzt somit insbesondere konvergierende Schlitzwände 40, 41.

Im Schlitzbereich 37 können mehrere, in der Umlaufrichtung voneinander beabstandete Radialstege 42 vorgesehen sein. Über diese Radialstege 42 können sich die sich radial gegenüberliegenden Schlitzwände 40, 41 radial aneinander abstützen. Die Radialstege 42 sind zweckmäßig integral an der Dichtung 11 ausgeformt. Bei einer alternativen Ausführungsform können die Radialstege 42 auch integral am zweiten Gehäuseteil 4 ausgeformt sein. Ebenso ist eine Ausführungsform denkbar, die sowohl in die Dichtung 11 integrierte Radialstege 42 als auch in das zweite Gehäuseteil 4 integrierte Radialstege 42 umfasst, wobei dann gehäuseseitige Radialstege 42 in der Umfangsrichtung zwischen dichtungsseitigen Radialstegen 42 in den Schlitzbereich 37 eintauchen.

Anstelle mehrerer, in der Umlaufrichtung voneinander beabstandeter Radialstege 42 kann am zweiten Gehäuseteil 4 auch ein umlaufender, axial abstehender Steg ausgeformt sein, der beim Montieren des zweiten Gehäuseteils 4 in den Schlitzbereich 37 axial eintaucht.

Um den Außensteg 22 ist außen umlaufend ein Schutzkragen 50 angeordnet. Dieser Schutzkragen 50 ist einstückig mit dem ersten Gehäuseteil 3 ausgebildet. Zwischen den Außensteg 33 und den Schutzkragen 50 greift eine Kontur 51 bzw. ein Wandbereich 51 des zweiten Gehäuseteils 4 ein. Somit ist eine "Schikane" zwischen den Gehäuseteilen 3 und 4 gebildet, welche ein direktes Einwirken von mechanischen Kräften oder Eindringen von Schmutz verhindert. Außerdem kann durch diese "Schikane" eine grobe Positionierung der Gehäuseteile 3,4 zueinander erreicht werden, wodurch die Montage erleichtert wird.

Gemäß Fig. 2 kann das Filterelement 5 in der Axialrichtung einen mehreckigen, vorzugsweise einen rechteckigen, Querschnitt aufweisen, der mehrere Eckbereiche 43 aufweist. In wenigstens einem solchen Eckbereich 43 kann der Schlitzbereich 37 eine radiale Ausnehmung 44 aufweisen. Im Beispiel befindet sich besagte Ausnehmung 44 in der radial außenliegenden Schlitzwand 41. Erkennbar durchdringt die Ausnehmung 44 die Dichtung 11 nicht. Beispielsweise ragt die Ausnehmung 44 maximal bis zur Hälfte der Wandstärke der Dichtung 11 in den zwischen dem Schlitzbereich 37 und der jeweiligen benachbarten Dichtfläche 17 bzw. 18 ein.

Wie Fig. 2 zu entnehmen ist, können die Radialstege 42 jeweils zwei Außenseiten 45 aufweisen, die in der Umlaufrichtung voneinander abgewandt sind. Fig. 2 zeigt unterschiedliche Ausführungsformen der Radialstege 42, die zweckmäßig alternativ zur Anwendung kommen können oder aber auch kumulativ oder quasi in beliebiger Kombination realisierbar sind. Gezeigt sind in Fig. 2 exemplarisch vier unterschiedliche Radialstege 42, die im Uhrzeigersinn im Folgenden als erster, zweiter, dritter bzw. vierter Radialsteg 42 bezeichnet werden. Beim ersten Radialsteg 42 erstrecken sich die Außenseiten 45 parallel zueinander und parallel zur Radialrichtung. Beim zweiten Radialsteg 42 erstrecken sich die beiden Außenseiten 45 wieder parallel zueinander, jedoch gegenüber der Radialrichtung geneigt. Beim dritten Radialsteg 42 erstrecken sich die zugehörigen Außenseiten 45 zueinander geneigt, und zwar derart, dass sie nach radial außen konvergieren. Beim vierten Radialsteg 42 erstrecken sich die Außenseiten 45 wieder geneigt zueinander, und zwar so, dass sie nach radial außen divergieren.

Im Übrigen können die Radialstege 42 unabhängig von der Orientierung ihrer Außenseiten 45 in der Axialrichtung 8 gleich groß sein wie der Schlitzbereich 37. Ebenso ist es möglich, die Radialstege 42 in der Axialrichtung 8 kleiner als den Schlitzbereich 37 zu dimensionieren. Dabei können alle Radialstege 42 in der Axialrichtung 8 gleich groß dimensioniert sein. Ebenso ist es möglich, die Radialstege 42, in der Axialrichtung 8 mit unterschiedlichen Größen zu versehen. In Fig. 1 ist mit einer unterbrochenen Linie 46 ein dem zweiten Gehäuseteil 4 zugewandtes stirnseitiges Ende eines Radialstegs 42 angedeutet, der in Axialrichtung 8 kürzer ist als die Tiefe 38 des Schlitzbereichs 37.

## Patentansprüche

1. Filtereinrichtung für Gase, insbesondere Luftfiltereinrichtung, vorzugsweise für eine Frischluftanlage einer Brennkraftmaschine, zum Beispiel eines Kraftfahrzeugs,
- mit einem Gehäuse (2), das zumindest ein erstes Gehäuseteil (3) und ein zweites Gehäuseteil (4) aufweist, die in einem Flanschbereich (7) axial aneinander anstoßen,
- mit einem plattenförmigen Filterelement (5), das eine umlaufende Dichtung (11) aufweist, die in den Flanschbereich (7) eingreift,
- wobei das erste Gehäuseteil (3) im Flanschbereich (7) zwei einander gegenüberliegende radiale Anlageflächen (15, 16) aufweist,
- wobei die Dichtung (11) zwei voneinander abgewandte radiale Dichtflächen (17, 18) aufweist, die flächig an den Anlageflächen (15, 16) anliegen,
**dadurch gekennzeichnet**,
- dass die Dichtung (11) radial zwischen den Dichtflächen (17, 18) einen umlaufenden, zum zweiten Gehäuseteil (4) axial offenen Schlitzbereich (37) aufweist,
- dass im Schlitzbereich (37) mehrere, in Umlaufrichtung voneinander beabstandete Radialstege (42) vorgesehen sind, über die sich radial gegenüberliegende Schlitzwände (40, 41) aneinander radial abstützen.

2. Filtereinrichtung nach Anspruch 1,
**dadurch gekennzeichnet**,
- dass das erste Gehäuseteil (3) einen im Flanschbereich (7) umlaufenden, axial abstehenden, die radial außenliegende radiale Anlagefläche (16) aufweisenden Außensteg (22) aufweist,
- dass das zweite Gehäuseteil (4) eine im Flanschbereich (7) umlaufende axiale Stützfläche (23) aufweist, an welcher sich der Außensteg (22) axial abstützt.

3. Filtereinrichtung nach Anspruch 1 oder 2,
**dadurch gekennzeichnet**,
- dass die Radialstege (42) integral an der Dichtung (11) oder integral am zweiten Gehäuseteil (4), insbesondere an dessen Stützfläche (23) gemäß Anspruch 2, ausgeformt sind, oder
- dass mehrere Radialstege (42) integral an der Dichtung (11) und mehrere Radialstege (42) integral am zweiten Gehäuseteil (4), insbesondere an dessen Stützfläche (23) gemäß Anspruch 2, ausgeformt sind.

4. Filtereinrichtung nach einem der Ansprüche 1 bis 3,
**dadurch gekennzeichnet**,
dass die Radialstege (42) in der Axialrichtung (8) gleich groß wie oder kleiner als der Schlitzbereich (37) ausgestaltet sind.

5. Filtereinrichtung nach einem der Ansprüche 1 bis 4,
**dadurch gekennzeichnet**,
dass die Radialstege (42) in der Axialrichtung (8) unterschiedliche Größen aufweisen.

6. Filtereinrichtung nach einem der Ansprüche 1 bis 5,
**dadurch gekennzeichnet**,
dass die Radialstege (42) in der Umlaufrichtung voneinander abgewandte Außenseiten (45) aufweisen, die sich parallel zueinander oder zueinander geneigt erstrecken, wobei die zueinander geneigten Außenseite (45) nach radial außen konvergieren oder divergieren können und/oder wobei die zueinander parallelen Außenseiten (45) parallel zur Radialrichtung (10) verlaufen können.

7. Filtereinrichtung nach einem der Ansprüche 1 bis 6,
**dadurch gekennzeichnet**,
- dass das Filterelement (5) in der Axialrichtung (8) einen mehreckigen, insbesondere rechteckigen, Querschnitt aufweist,
- dass der Schlitzbereich (37) in wenigstens einem Eckbereich (43) des Filterelements (5), vorzugsweise in jedem Eckbereich (43) des Filterelements (5), eine radiale Ausnehmung (44) aufweist, und zwar insbesondere an einer radial außenliegenden Schlitzwand (41).

8. Filtereinrichtung nach einem der Ansprüche 1 bis 7,
**dadurch gekennzeichnet**,
- dass das erste Gehäuseteil (3) im Flanschbereich (7) eine umlaufende, zum zweiten Gehäuseteil (4) axial offene Nut (24) aufweist, deren einander zugewandten Nutwände (25, 26) die Anlageflächen (15, 16) aufweisen oder bilden,
- dass zwischen der Dichtung (11) und einem zwischen den Nutwänden (25, 26) liegenden Nutgrund (27) ein Axialabstand (29) vorhanden ist.

9. Filtereinrichtung nach einem der Ansprüche 1 bis 8,
**dadurch gekennzeichnet**,
- dass die Dichtung (11) radial zwischen den radialen Dichtflächen (17, 18) eine umlaufende axiale Dichtfläche (34) aufweist, die an einer umlaufenden, im Flanschbereich (7) am zweiten Gehäuseteil (4) ausgebildeten axialen Anlagefläche (36) axial anliegt,
- wobei insbesondere vorgesehen sein kann, dass die axiale Anlagefläche (36) axial auf gleicher Höhe angeordnet ist wie eine axiale Stützfläche (23) nach Anspruch 2.

10. Filtereinrichtung nach einem der Ansprüche 1 bis 9,
**dadurch gekennzeichnet**,
- dass das erste Gehäuseteil (3) einen im Flanschbereich (7) umlaufenden axial abstehenden, eine radial innenliegende radiale Anlagefläche (15) aufweisenden Innensteg (31) aufweist,
- wobei insbesondere vorgesehen sein kann, dass die Dichtung (11) eine im Flanschbereich (7) umlaufende axiale Dichtfläche (33) aufweist, an welcher sich der Innensteg (31) axial abstützt.

11. Filtereinrichtung nach Anspruch 10,
**dadurch gekennzeichnet**,
- dass zwischen dem Innensteg (31) und dem zweiten Gehäuseteil (4) ein Radialabstand (32) vorhanden ist, der von der Dichtung (11) durchsetzt ist, und/oder
- dass zwischen der dem Innensteg (31) zugewandten axialen Dichtfläche (33) und einer dem zweiten Gehäuseteil (4) zugewandten axialen Dichtfläche (34) nach Anspruch 9 ein Axialabstand (35) vorhanden ist, und/oder
- dass der Innensteg (31) in der Axialrichtung (8) kürzer ist als ein Außensteg (22) nach Anspruch 2.

12. Plattenförmiges Filterelement für eine Filtereinrichtung (1), mit einer umlaufenden Dichtung (11), die zwei voneinander abgewandte radiale Dichtflächen (17, 18) aufweist und die radial zwischen den Dichtflächen (17, 18) einen umlaufenden, axial offenen Schlitzbereich (37) aufweist,
**dadurch gekennzeichnet**,
dass im Schlitzbereich (37) mehrere, in Umlaufrichtung voneinander beabstandete Radialstege (42) vorgesehen sind, über die sich radial gegenüberliegende Schlitzwände (40, 41) aneinander radial abstützen.

## Claims

1. Filter device for gases, particularly an air filtering device, preferably for a fresh air apparatus of an internal combustion engine, for example in a motor car,
- having a housing (2) which comprises at least a first housing part (3) and a second housing part (4) which axially abut one another in a flange region (7),
- having a plate-shaped filter element (5) comprising a circumferential seal (11) which engages in the flange region (7),
- the first housing part (3) comprising, in the flange region (7), two radial bearing surfaces (15, 16) located opposite one another,
- the seal (11) having two radial sealing surfaces (17, 18) facing away from each other which lie flat against the bearing surfaces (15, 16),
**characterised in that**
- the seal (11) comprises, radially between the sealing surfaces (17, 18), a circumferentially extending slotted region (37) which is axially open towards the second housing part (4),
- a plurality of radial webs (42) spaced apart from one another in the circumferential direction, by means of which radially opposing slotted walls (40, 41) are radially supported on one another, are provided in the slotted region (37).

2. Filter device according to claim 1,
**characterised in that**
- the first housing part (3) has an axially protruding outer web (22) extending circumferentially in the flange region (7) and comprising the radially outer radial bearing surface (16),
- the second housing part (4) has an axial supporting surface (23) extending circumferentially in the flange region (7) and configured to support the outer web (22).

3. Filter device according to claim 1 or 2,
**characterised in that**
- the radial webs (42) are integrally formed on the seal (11) or integrally formed on the second housing part (4), particularly on the support surface (23) thereof, according to claim 2, or
- a plurality of radial webs (42) are integrally formed on the seal (11) and a plurality of radial webs (42) are integrally formed on the second housing part (4), particularly on the support surface (23) thereof, according to claim 2.

4. Filter device according to one of claims 1 to 3,
**characterised in that** the radial webs (42) are as big as or smaller than the slotted region (37) in the axial direction (8).

5. Filter device according to one of claims 1 to 4,
**characterised in that** the radial webs (42) are of different sizes in the axial direction (8).

6. Filter device according to one of claims 1 to 5,
**characterised in that** the radial webs (42) comprise outer sides (45) which face away from one another in the circumferential direction and which extend parallel to one another or slope relative to one another, wherein the outer sides (45) sloping relative to one another may converge or diverge radially outwards, and/or wherein the parallel outer sides (45) may run parallel to the radial direction (10).

7. Filter device according to one of claims 1 to 6,
**characterised in that**
- the filter element (5) has a polygonal, especially rectangular, crosssection in the axial direction (8),
- the slotted region (37) has a radial recess (44) in at least one corner region (43) of the filter element (5), preferably in each corner region (43) of the filter element (5), particularly on a radially outer slotted wall (41).

8. Filter device according to one of claims 1 to 7,
**characterised in that**
- the first housing part (3) comprises, in the flange region (7), an encircling groove (24) which is axially open towards the second housing part (4), the facing groove walls (25, 26) of which comprise or form the bearing surfaces (15, 16),
- there is an axial spacing (29) between the seal (11) and a groove base (27) located between the groove walls (25, 26).

9. Filter device according to one of claims 1 to 8,
**characterised in that**
- the seal (11) comprises, radially between the radial sealing surfaces (17, 18), a circumferential, axial sealing surface (34) which abuts axially on a circumferentially extending, axial bearing surface (36) formed in the flange region (7) on the second housing part (4),
- while it may be envisaged in particular that the axial bearing surface (36) is arranged axially at the same height as an axial support surface (23) according to claim 2.

10. Filter device according to one of claims 1 to 9,
**characterised in that**
- the first housing part (3) comprises an axially protruding inner web (31) extending circumferentially in the flange region (7) and comprising a radially inner radial bearing surface (15),
- while it may be envisaged in particular that the seal (11) comprises an axial sealing surface (33) extending circumferentially in the flange region (7), on which the inner web (31) is axially supported.

11. Filter device according to claim 10,
**characterised in that**
- between the inner web (31) and the second housing part (4) there is a radial gap (32) through which the seal (11) passes, and/or
- between the axial sealing surface (33) facing the inner web (31) and an axial sealing surface (34) facing the second housing part (4), according to claim 9, an axial gap (35) is provided, and/or
- the inner web (31) is shorter in the axial direction (8) than an outer web (22) according to claim 2.

12. Plate-shaped filter element for a filter device (1), having a circumferential seal (11) which comprises two radial sealing surfaces (17, 18) facing away from one another and which comprises, radially between the sealing surfaces (17, 18), a circumferentially extending, axially open slotted region (37),
**characterised in that** a plurality of radial webs (42) spaced apart from one another in the circumferential direction, by means of which the radially opposing slotted walls (40, 41) are radially supported on one another, are provided in the slotted region (37).

## Revendications

1. Dispositif de filtrage pour des gaz, notamment dispositif de filtre à air, notamment pour une installation d'air frais d'un moteur à combustion interne, par exemple d'un véhicule automobile,
- avec un carter (2), qui comporte au moins une première partie de carter (3) et une deuxième partie de carter (4) qui s'appuient l'une contre l'autre de façon axiale dans une zone de collet (7),
- avec un élément de filtrage (5) en forme de plaque, qui comporte un joint périphérique (11) qui entre dans la zone de collet (7),
- la première partie de carter (3) comportant dans la zone de collet (7) deux surfaces d'appui (15, 16) radiales à l'opposé l'une de l'autre,
- le joint (11) comportant deux surfaces d'étanchéité (17, 18) radiales éloignées l'une de l'autre, qui s'appuient par leur surface contre les surfaces d'appui (15, 16),
**caractérisé en ce que**
- le joint (11) comporte de façon radiale entre les surfaces d'étanchéité (17, 18) une zone fendue périphérique (37) ouverte de façon axiale en direction de la deuxième partie de carter (4)
- et plusieurs traverses radiales (42), à une certaine distance les unes des autres dans la direction périphérique, sont prévues dans la zone fendue (37), traverses par l'intermédiaire desquelles les parois de fente (40, 41) de façon radiale à l'opposé les unes des autres s'appuient de façon radiale les unes aux autres.

2. Dispositif de filtrage selon la revendication 1, **caractérisé en ce que**
- la première partie de boîtier (3) comporte une traverse extérieure (22), périphérique dans la zone de collet (7), agencée à une certaine distance de façon axiale et comportant la surface d'appui radiale (16) située de façon radiale à l'extérieur,
- et la deuxième partie de carter (4) comporte une surface de support axiale (23) qui est périphérique dans la zone de collet (7) et à laquelle la traverse extérieure (22) s'appuie de façon axiale.

3. Dispositif de filtrage selon la revendication 1 ou 2, **caractérisé en ce que**
- les traverses radiales (42) sont formées intégralement sur le joint (11) ou intégralement sur la deuxième partie de carter (4), notamment sur la surface d'appui (23) de celle-ci selon la revendication 2, ou
- plusieurs traverses radiales (42) sont formées intégralement sur le joint (11) et plusieurs traverses radiales (42) sont formées intégralement sur la deuxième partie de carter (4), notamment sur la surface d'appui (23) de celle-ci selon la revendication 2.

4. Dispositif de filtrage selon l'une des revendications 1 à 3, **caractérisé en ce que** les traverses radiales (42) sont conçues, dans la direction axiale (8), de dimension inférieure ou égale à la zone fendue (37).

5. Dispositif de filtrage selon l'une des revendications 1 à 4, **caractérisé en ce que** les traverses radiales (42) ont, dans la direction axiale (8), des dimensions différentes.

6. Dispositif de filtrage selon l'une des revendications 1 à 5, **caractérisé en ce que** les traverses radiales (42) comportent des côtés extérieurs (45) qui sont éloignés les uns des autres dans la direction périphérique et qui s'étendent parallèlement les uns aux autres ou de manière inclinée les uns vers les autres, les côtés extérieurs (45) inclinés les uns vers les autres pouvant converger ou diverger de façon radiale vers l'extérieur et/ou les côtés extérieurs (45) parallèles les uns aux autres pouvant s'étendre parallèlement à la direction radiale (10).

7. Dispositif de filtrage selon l'une des revendications 1 à 6, **caractérisé en ce que**
- l'élément de filtrage (5) a dans la direction axiale (8) une section transversale polygonale, notamment rectangulaire,
- la zone fendue (37) comporte dans au moins une zone d'angle (43) de l'élément de filtrage (5), de préférence dans chaque zone d'angle (43) de l'élément de filtrage (5), un évidement radial (44), et ce notamment sur une paroi de fente (41) de façon radiale à l'extérieur.

8. Dispositif de filtrage selon l'une des revendications 1 à 7, **caractérisé en ce que**
- la première partie de carter (3) comporte dans la zone de collet (7) une rainure (24) périphérique qui est ouverte de façon axiale en direction de la deuxième partie de carter (4) et dont les parois de rainure (25, 26) proches l'une de l'autre comportent ou forment les surfaces d'appui (15, 16),
- il existe une distance axiale (29) entre le joint (11) et un fond de rainure (27) situé entre les parois de rainure (25, 26).

9. Dispositif de filtrage selon l'une des revendications 1 à 8, **caractérisé en ce que**
- le joint (11) comporte, agencée de façon radiale entre les surfaces d'étanchéité radiales (17, 18), une surface d'étanchéité axiale périphérique (34) qui est adjacente de façon axiale à une surface d'appui (36) périphérique conçue dans la zone de collet (7) sur la deuxième partie de carter (4),
- il peut notamment être prévu que la surface d'appui axiale (36) soit agencée de façon axiale à la même hauteur qu'une surface de support axiale (23) selon la revendication 2.

10. Dispositif de filtrage selon l'une des revendications 1 à 9, **caractérisé en ce que**
- la première partie de carter (3) comporte une traverse intérieure (31) périphérique qui est de façon axiale à une certaine distance dans la zone de collet (7) et qui comporte une surface d'appui (15) radiale et située de façon radiale à l'intérieur,
- il peut notamment être prévu que le joint (11) comporte une surface d'étanchéité axiale (33) qui est périphérique dans la zone de collet (7) et à laquelle la traverse intérieure (31) s'appuie de façon axiale.

11. Dispositif de filtrage selon la revendication 10, **caractérisé en ce que**
- un dispositif d'écartement axial (32), qui est traversé par le joint (11), est prévu entre la traverse intérieure (31) et la deuxième partie de carter (4), et/ou
- un dispositif d'écartement axial (35) est prévu entre la surface d'étanchéité (33) axiale proche de la traverse intérieure (31) et la surface d'étanchéité (34) axiale proche de la deuxième partie de carter (4) selon la revendication 9, et/ou
- la traverse intérieure (31) est plus courte dans la direction axiale (8) qu'une traverse extérieure (22) selon la revendication 2.

12. Élément de filtrage en forme de plaque pour un dispositif de filtrage (1), avec un joint périphérique (11), qui comporte deux surfaces d'étanchéité (17, 18) radiales à l'opposé l'une de l'autre et qui comporte de façon radiale entre les surfaces d'étanchéité (17, 18) une zone fendue (37) périphérique ouverte de façon axiale,
**caractérisé en ce qu'**il est prévu dans la zone fendue (37) plusieurs traverses radiales (42) qui sont à une certaine distance les unes des autres dans la direction périphérique et par l'intermédiaire desquelles des parois de fente (40, 41) de façon radiale à l'opposé l'une de l'autre s'appuient de façon radiale l'une contre l'autre.
